(19) Europäisches Patentamt / European Patent Office / Office européen des brevets

(11) **EP 2 889 323 A1**

(12) **EUROPEAN PATENT APPLICATION**

(43) Date of publication:
01.07.2015 Bulletin 2015/27

(51) Int Cl.:
*C08J 3/22* (2006.01)          *C08L 23/06* (2006.01)
*F16L 9/12* (2006.01)

(21) Application number: **13199824.7**

(22) Date of filing: **30.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Abu Dhabi Polymers Company Limited (Borouge)**
  **Abu Dhabi (AE)**
• **Borealis AG**
  **1220 Vienna (AT)**

(72) Inventors:
• **Deveci, Suleyman**
  **Abu Dhabi (AE)**
• **Buryak, Andrey**
  **Abu Dhabi (AE)**

• **Motha, Kshama**
  **Abu Dhabi (AE)**
• **Kumar, Ashish**
  **Abu Dhabi (AE)**
• **Äärilä, Jari**
  **06100 Porvoo (FI)**
• **Martin, Sanna**
  **00950 Helsinki (FI)**
• **Hristov, Velichko**
  **4040 Linz (AT)**
• **Bergman, Nicke**
  **444 92 Jörlanda (SE)**

(74) Representative: **Campbell, Neil Boyd**
**Dehns**
**St Bride's House**
**10 Salisbury Square**
**London**
**EC4Y 8JD (GB)**

(54) **Polymer composition comprising carbon black and a carrier polymer for the carbon black**

(57) A masterbatch (MB) comprising, preferably consisting of,
(I) 20-50 wt% pigment based on the total amount of the masterbatch (100 wt%);
(II) at least 40 wt% of at least one carrier polymer which is a multimodal high density polyethylene (HDPE) polymer having an $MFR_2$ of 1 to 20 g/10 min, a density of 940 to 965 kg/m$^3$ (pref 950 to 960) and a Mw/Mn of 5.5 to 20; and
(IV) optionally further additives.

**Description**

This invention relates to polymer compositions suitable for the manufacture of articles for pipe, wire and cable (W&C) and film applications, in particular for pipe applications, more preferably pressure pipe applications. The invention further relates to a masterbatch which, when combined with a suitable base resin, offers a polymer composition with valuable properties for the above applications. The invention further relates to articles, such as pipes, layers of a cable or films, comprising the polymer composition of the invention and a process for the formation of the masterbatch, polymer composition and the articles themselves.

**Background**

Pigments (color pigments or carbon black) are used, e.g. as colorants and/or UV stabilisers (carbon black), in many polyethylene applications including pipe, W&C and film applications. Pigments, e.g. carbon black (CB), are conventionally added to the polymer in form of a well-known masterbatch (MB), which comprises the pigment, such as carbon black, together with a carrier polymer.

Pigment MB, for instance a carbon black MB, typically contains up to 40 wt% pigment. Loading of such a high level of pigment to a carrier polymer increases substantially the viscosity of the resulting MB mixture. The increase in viscosity makes good dispersion of the pigment particles in the final polyethylene composition very difficult to achieve.

To solve the above dispersion problem, one solution is to increase melt flow rate (MFR) and hence reduce the viscosity of the masterbatch. The melt flow rate (MFR) of the carrier polymer therefore has to be sufficiently high in order to incorporate relatively high loadings of pigment. A sufficiently high MFR is typically achieved using a unimodal PE with low weight average molecular weight (Mw) as the carrier polymer for pigment MB. However, the use of a high MFR unimodal polymer in the MB is limiting as that MB may not be compatible with all base resins with which it is combined.

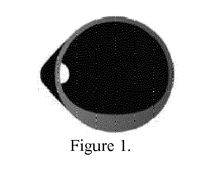

Moreover, for pipe applications, especially in pressure pipe applications, the pipes have a tendency to sag during the pipe converting process due to the weight of the pipes themselves. Sagging refers to the flow of material to the lower section of the pipe under gravity (as shown in Fig 1), before it is fully solidified in the pipe converting process. This leads to pipes with an oval shape and non-uniform pipe thickness over the circumference of the pipe. Such asymmetric pipes are not favoured by the end user.

One way to prevent sagging in pipe applications is to increase the melt viscosity of the polyethylene base resin used in the pipe manufacturing process. Polymers with higher melt viscosity flow less and are less likely to sag. If the melt viscosity of the polyethylene base resin is increased then sagging is indeed reduced. However, increasing melt viscosity has its problems, namely, a base polymer with high melt viscosity is harder to melt and extrude and hence the processability (production rate) of the material is reduced. As a conclusion, the energy consumption is increased and production rate is decreased when producing pipe using a base polymer with a higher melt viscosity. A solution to that problem is to increase melt viscosity in the low shear rate region (low shear viscosity) where sagging is experienced. If the melt viscosity in the high shear rate region is maintained then the processability of the polymer remains good. This solution to sagging can be realised by careful polymer design, in particular optimising molecular weight and molecular weight distribution.

For production of, *inter alia*, black polyethylene pipes the carrier polymer in the carbon black MB is typically another polyethylene than the base resin. Polyethylene base resins used for pressure pipe applications have very high molecular weights and correspondingly low MFR. As noted above, some pigment masterbatches use carrier polymers with high MFR. In that case the difference in molecular weight between the carrier polymer in the MB and the main polymer in the pressure pipe (the base resin herein) is consequently high. The often used unimodal carrier polymer could have a typical Mw of 55,000 g/mol whereas the pipe resin might have a weight average molecular weight (Mw) of 180,000 g/mol or more. Therefore, e.g. in pressure pipes, the presence of a lower molecular weight carrier polymer as part of the MB can influence sagging negatively, i.e. increase sagging on account of melt viscosity reduction due to presence of lower molecular weight (higher MFR) carrier polymer. That problem cannot just be solved by using a higher Mw (lower MFR) carrier polymer in the MB, since, as discussed above, the combination of the higher Mw carrier polymer and the high pigment (e.g. carbon black) content present in MB increases markedly the viscosity of the MB mixture.

The present inventors therefore sought alternative ways of ensuring good dispersion of the masterbatch within a variety of final polyethylene compositions. The inventors also sought a solution to the specific problem caused by the incorporation of a low Mw pigment masterbatch to an otherwise high Mw polyethylene base resin, e.g. in terms of sagging in a pipe.

**Summary of Invention**

Thus, viewed from one aspect the invention provides a masterbatch (MB) comprising, preferably consisting of,

(I) 20-50 wt% pigment based on the total amount of the masterbatch (100 wt%);
(II) at least 40 wt% of at least one carrier polymer which is a multimodal high density polyethylene (HDPE) polymer having an $MFR_2$ of 1 to 20 g/10 min, a density of 940 to 965 kg/m$^3$ and a Mw/Mn of 5.5 to 20; and
(III) optionally further additives.

The present inventors have surprisingly found that by using the claimed multimodal carrier polymer of the invention with higher molecular weight (lower MFR) instead of a conventional unimodal higher MFR polyethylene, the obtained MB is well dispersed in the base resin with which they are combined.

The inventors have also surprisingly found that using multimodal HDPE as claimed and described herein as a carrier polymer in a pigment masterbatch, such as a carbon black masterbatch, ensures that the filler wetting and dispersion of the pigment in the carrier polymer is at least comparable with that of conventional masterbatches.

The MB of the invention is highly suitable for different base resins and for various end applications, preferably for pipe applications, W&C applications and for film applications.

This good dispersion also leads to mechanical properties which are at least comparable to those achieved using conventional unimodal carrier polymers, e.g. in terms of pipe failure performance.

The MB of the invention is highly suitable for base resins with various densities.

Viewed from another aspect the invention provides a polyethylene composition suitable for pipe, a layer of a cable and film applications, preferably suitable for pipe applications, comprising, preferably consisting of,

(i) at least 80 wt% of a base resin which comprises, preferably consists of, a polyethylene polymer having $MFR_5$ of 0.05 to 5.0 g/10min and a density of 920 to 960 kg/m$^3$; and
(ii) at least 1 wt% of a masterbatch as hereinbefore defined;

wherein the polyethylene composition has a density of 930 to 970 kg/m$^3$.

Viewed from another aspect the invention provides a polyethylene composition suitable for pipe, a layer of a cable or film applications, preferably suitable for pipe applications, comprising, preferably consisting of,

(i) at least 80 wt% of a base resin which comprises, preferably consists of, a polyethylene polymer having $MFR_5$ of 0.05 to 5.0 g/10min and a density of 920 to 960 kg/m$^3$; and
(ii) a masterbatch comprising a pigment and at least one carrier polymer which is a multimodal high density polyethylene (HDPE) polymer having an $MFR_2$ of 1 to 20 g/10 min, a density of 940 to 965 kg/m$^3$ and a Mw/Mn of 5.5 to 20;

wherein the polyethylene composition has a density of 930 to 970 kg/m$^3$ and wherein the polyethylene composition comprises 1 to 10 wt% of pigment.

Furthermore, the use of the multimodal masterbatch enables also the use of a carrier polymer with lower MFR together with the same pigment loading as usually used in high MFR unimodal MBs (i.e. without decreasing the amount of the pigment). Accordingly, the MB of the invention is suitable for use with polyethylene base resins with varying MFR. E.g. the lower MFR MB of the invention can be well dispersed with a pipe polyethylene base resin with low MFR and in the resulting polymer composition, wherein the difference between the MFR of the base resin and the MFR of the carrier polymer is advantageously small. That has additional benefits in pipe applications such as reduced sagging.

Viewed from another aspect the invention provides an article comprising, preferably consisting of, the polyethylene composition as hereinbefore defined, preferably a pipe, layer, preferably jacketing layer, of a cable or a film layer, especially a pipe, most especially a pressure pipe comprising, preferably consisting of, the polyethylene composition as hereinbefore defined.

Viewed from another aspect the invention provides a process for the production of a masterbatch as hereinbefore defined comprising blending

(I) 20-50 wt% of a pigment;
(II) at least 40 wt% of at least one carrier polymer which is a multimodal high density polyethylene (HDPE) polymer having an $MFR_2$ of 1 to 20 g/10 min, density of 940 to 965 kg/m$^3$ and a Mw/Mn of 5.5 to 20; and

melt compounding the same.

Viewed from another aspect the invention provides a process for the production of a polyethylene composition as herein before defined comprising blending at least 1 wt% of a masterbatch as hereinbefore defined with at least 80 wt% of a base resin which comprises, preferably consists of, a polyethylene polymer having $MFR_5$ of 0.05 to 5.0 g/10min and a density of 920 to 960 kg/m$^3$; and melt compounding the same. Preferably the invention further comprises conversion of that melt compounded material into an article such as a pipe, cable layer or film layer.

**Definitions**

The term Mw refers to the weight average molecular weight of the polymer in question. Mn refers to the number average molecular weight.

The term base resin is used to define the polymer which forms the major polymer to which the masterbatch is added. The carrier polymer is the polymer used to carry the pigment in the masterbatch.

The polyethylene composition is the composition formed by combining at least the base resin and the masterbatch.

**Detailed Description of Invention**

Good dispersion of the masterbatch within the base resin is critical for the performance of the final polyethylene composition as a whole. The present invention provides masterbatches that are well dispersed in the base resin, and, additionally preferably, overcomes, *inter alia,* a solution to the problems caused by the incorporation of a low Mw carrier polymer, as part of a MB, to an otherwise high Mw polyethylene base resin in terms dispersion of the MB (and hence dispersion of the low Mw carrier polymer) in the high Mw polyethylene base resin.

The masterbatches described herein are surprisingly well dispersed in the base resin of the final polyethylene composition. Surprisingly, the pigment is also well dispersed within the carrier polymer of the masterbatch itself.

By using multimodal high density polyethylene (HDPE) as described herein as a carrier polymer for pigment improves the filler wetting and dispersion and provides masterbatches having both good interfacial properties and strength. Moreover, wetting and dispersion of the masterbatch within the base resin can preferably be controlled by changing the ratio of the MFR of the lower weight average molecular weight (LMW) component to the final MFR of the carrier polymer and /or by controlling the LMW component to HMW component split ratio of the carrier polymer.

This good dispersion leads to mechanical properties which are comparable to those achieved using conventional unimodal carrier polymers, e.g. in terms of pipe failure. Without limiting to any theory, it is believed that the good dispersion of the pigment, e.g. carbon black, within the masterbatch as well as the good dispersion of the masterbatch in the base resin is a result of the modality of the carrier polymer of the masterbatch.

Even further preferably, the present inventors have surprisingly found that by using a multimodal carrier polymer of higher molecular weight (lower MFR) instead of unimodal higher MFR material, then the melt viscosity, and in particular melt viscosity in the low shear rate region is improved, and melt viscosity at high shear rates maintained which corresponds to reduced sagging without compromising processability. Moreover, this can be achieved while maintaining good mechanical properties. Therefore, the MB of the invention is highly suitable for pipe, preferably for pressure pipe applications.

Finally, we believe that the use of the multimodal HDPE in the masterbatch may enable the use of a lower MFR resin as a carrier polymer at the same pigment, e.g. carbon black, loading. That results in a smaller difference between base resin MFR and carrier polymer MFR in the final polymer composition and hence reduced sagging.

This invention also relates to a masterbatch which can be combined with a base resin to form a polymer composition which is ideal for the manufacture of certain polymer articles such as pipes, in particular pressure pipes.

**Masterbatch (MB) - carrier polymer**

The masterbatch comprises at least one pigment and at least one carrier polymer. Most preferably, there is only one carrier polymer present. Most preferably there is only one pigment present. It will be appreciated that the masterbatch may contain other standard polymer additives.

The carrier polymer used in the masterbatch is a multimodal high density polyethylene polymer (multimodal HDPE). The carrier polymer is multimodal with respect to its molecular weight distribution, preferably bimodal with respect to its molecular weight distribution.

The carrier polymer is referred herein below as carrier polymer of multimodal HDPE.

The carrier polymer is a multimodal high density ethylene polymer and may be an ethylene homopolymer or an ethylene copolymer. By ethylene copolymer is meant herein that at least one component of the multimodal HDPE is a copolymer of ethylene with comonomer(s) other than ethylene, wherein the majority by weight of the polymer derives from ethylene monomer units. The comonomer contribution preferably is up to 10% by mol, more preferably up to 5 % by mol, based on the total amount of monomer(s) present in the multimodal HDPE. Preferably, the lower limit of the comonomer present in the multimodal HDPE of the present invention is 0.1 to 2 mol%, e.g. 0.1 to 1 mol%.

The other copolymerisable monomer or monomers are preferably C3-20, especially C3-10, alpha olefin comonomers, particularly singly or multiply ethylenically unsaturated comonomers, in particular C3-10-alpha olefins such as propene, but-1-ene, hex-1-ene, oct-1-ene, and 4-methyl-pent-1-ene. The use of hexene and butene is particularly preferred. More preferably there is only one comonomer present.

It is preferred if the carrier polymer is a multimodal HDPE copolymer and therefore comprises ethylene and at least one comonomer, such as one comonomer only. More preferably that comonomer is 1-butene.

The carrier polymer is multimodal and therefore comprises at least two components. The carrier polymer preferably comprises

(A) a lower weight average molecular weight (LMW) first ethylene homo- or copolymer component, and
(B) a higher weight average molecular weight (HMW) second ethylene homo- or copolymer component, preferably copolymer component.

The LMW component has a lower Mw than the HMW component. It is generally preferred if the higher molecular weight component has an Mw of at least 5000 more than the lower molecular weight component, such as at least 10,000 more.

Usually, a polyethylene comprising at least two polyethylene components, which have been produced under different polymerisation conditions resulting in different (weight average) molecular weights and molecular weight distributions for the components, is referred to as "multimodal". Accordingly, in this sense the carrier polymer of use in the masterbatch of the invention is a multimodal polyethylene. The prefix "multi" relates to the number of different polymer components present in the carrier polymer. Thus, for example, a carrier polymer consisting of two components only is called "bimodal".

The form of the molecular weight distribution curve, i.e. the appearance of the graph of the polymer weight component as function of its molecular weight, of such a multimodal polyethylene will show two or more maxima or at least be distinctly broadened in comparison with the curves for the individual components.

For example, if a polymer is produced in a sequential multistage process, utilising reactors coupled in series and using different conditions in each reactor, the polymer components produced in the different reactors will each have their own molecular weight distribution and weight average molecular weight. When the molecular weight distribution curve of such a polymer is recorded, the individual curves from these components are superimposed into the molecular weight distribution curve for the total resulting polymer product, usually yielding a curve with two or more distinct maxima.

The carrier polymer has an $MFR_2$ of 20 g/10 min or less, preferably 18 g/10min or less. The carrier polymer preferably has a minimum $MFR_2$ of 1 g/10min. More preferably, the carrier polymer has an $MFR_2$ in the range of 1.5 to 15 g/10min such as 1.8 to 10 g/10 min.

The density of the carrier polymer preferably is 940 kg/m$^3$ or more. The carrier polymer is therefore a high density polyethylene, HDPE. More preferably, the polymer has a density of 945 to 960 kg/m$^3$, more preferably 950-960 kg/m$^3$.

It will be appreciated that the molecular weight and molecular distribution of the carrier polymer is important. The carrier polymer preferably has a molecular weight distribution (MWD), Mw/Mn being the ratio of the weight average molecular weight Mw and the number average molecular weight Mn, of 5.8 to 18, preferably 6.0 to 15.

The weight average molecular weight Mw of the carrier polymer preferably is at least 50 kg/mol, more preferably at least 55 kg/mol, more preferably at least 60 kg/mol, and most preferably at least 70 kg/mol. Furthermore, the Mw of the composition preferably is at most 300 kg/mol, more preferably 275 kg/mol.

As noted above, the carrier polymer, i.e. the multimodal HDPE, of the invention preferably comprises a lower molecular weight component (A) and a higher molecular weight component (B). The weight ratio of component (A) to component (B) in the carrier polymer is in the range 30:70 to 70:30, more preferably 35:65 to 65:35, most preferably 38:62 to 58:42.

As mentioned above, the components (A) and (B) may both be ethylene copolymer or ethylene homopolymer, although preferably at least one of the components is an ethylene copolymer. Preferably, the carrier polymer comprises an ethylene homopolymer and an ethylene copolymer component.

Where one of the components is an ethylene homopolymer, this is preferably the component with the lower weight average molecular weight (Mw), i.e. component (A). An ideal polymer is therefore a lower molecular weight homopolymer component (A) with a higher molecular weight component (B), more preferably an ethylene 1-butene higher molecular weight component. Even more preferably the HMW component (B) is an ethylene copolymer.

The lower molecular weight component (A) preferably has an $MFR_2$ of 10 g/10min or higher, more preferably of 30 g/10min or higher.

Furthermore, component (A) preferably, has an $MFR_2$ of 1000 g/10 min or lower, preferably 800 g/10 min or lower, and most preferably 700 g/10min or lower.

As noted above, it has surprisingly been found that the use of certain multimodal HDPEs as carrier polymers can improve dispersion of the pigment within the masterbatch. In particular, a LMW component having a $MFR_2$ of 30 to 700 g/10min.

Preferably, component (A) is an ethylene homo- or copolymer with a density of at least 965 kg/m$^3$, preferably at least 968 kg/m$^3$

If component (A) is a copolymer, the comonomer is preferably 1-butene. Most preferably, component (A) is an ethylene homopolymer.

Preferably, component (B) is an ethylene homo- or copolymer with a density of less than 965 kg/m$^3$, preferably less than 940 kg/m$^3$.

Most preferably, component (B) is a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

It is a further feature of the invention that to maximise dispersion of the pigment within the carrier polymer that the ratio of MFR between the overall MFR$_2$ of the carrier polymer and the MFR$_2$ of the LMW component is in the range of 0.005 to 0.2. Without limiting to any theory, it is believed that at this ratio, the best wetting performance (pigment to the carrier polymer) is achieved. Moreover, the shear stress is sufficiently high to ensure the filler agglomerates disperse in the carrier. It is thus the LMW component that ensures wetting and the HMW component ensures that the agglomerates disperse within the carrier polymer.

Where herein features of components (A) and/or (B) of the carrier polymer of the present invention are given, these values are generally valid for the cases in which they can be directly measured on the respective component, e.g. when the component is separately produced or produced in the first stage of a multistage process. However, the carrier polymer may also be and preferably is produced in a multistage process wherein e.g. components (A) and (B) are produced in subsequent stages. In such a case, the properties of the components produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the component is produced, and by using a catalyst on which no previously produced polymer is present. Alternatively, the properties of the components produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the components produced in higher stages of such a multistage process can be determined by applying either or both of the above methods. The skilled person will be able to select the appropriate method.

A multimodal (e.g. bimodal) polyethylene as hereinbefore described may be produced by mechanical blending two or more polyethylenes (e.g. monomodal polyethylenes) having differently centred maxima in their molecular weight distributions. The monomodal polyethylenes required for blending may be available commercially or may be prepared using any conventional procedure known to the skilled man in the art. Each of the polyethylenes used in a blend may have the properties hereinbefore described for the lower molecular weight component, higher molecular weight component and the composition, respectively.

The carrier polymer is preferably manufactured however in a process involving polymerising ethylene and optionally at least one C3-20 alpha olefin comonomer so as to form a lower molecular weight component (A); and subsequently
polymerising ethylene and optionally at least one C3-20 alpha olefin comonomer in the presence of component (A) so as to form a higher molecular weight component (B).

It is preferred if at least one component is produced in a gas-phase reaction. Further preferred, one of the components (A) and (B) of the multimodal HDPE, preferably component (A), is produced in a slurry reaction, preferably in a loop reactor, and one of the components (A) and (B), preferably component (B), is produced in a gas-phase reaction.

Preferably, the multimodal HDPE carrier polymer may be produced by polymerisation using conditions which create a multimodal (e.g. bimodal) polymer product, e.g. using a catalyst system or mixture with two or more different catalytic sites, each site obtained from its own catalytic site precursor, or using a two or more stage, i.e. multistage, polymerisation process with different process conditions in the different stages or zones (e.g. different temperatures, pressures, polymerisation media, hydrogen partial pressures, etc).

Preferably, the multimodal (e.g. bimodal) HDPE as the carrier polymer is produced by a multistage ethylene polymerisation, e.g. using a series of reactors, with optional comonomer addition preferably in only the reactor(s) used for production of the higher/highest molecular weight component(s) or differing comonomers used in each stage. A multistage process is defined to be a polymerisation process in which a polymer comprising two or more components is produced by producing each or at least two polymer component(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

A multimodal polymer produced in a multistage process is also designated as an "*in-situ*" blend.

Accordingly, it is preferred that components (A) and (B) of the polyethylene carrier polymer are produced in different stages of a multistage process.

Preferably, the multistage process comprises at least one gas phase stage in which, preferably, component (B) is produced.

Further preferred, component (B) is produced in a subsequent stage in the presence of component (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the HDPE carrier polymer according to the invention.

Preferably, the main polymerisation stages of the multistage process for producing the composition according to the invention are such as described in EP 517 868, i.e. the production of components (A) and (B) is carried out as a combination of slurry polymerisation for component (A)/gas-phase polymerisation for component (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total composition is produced. The optional prepolymer is preferably an ethylene homopolymer (High Density PE). At the optional prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end. In any calculations of split, MFR, density and so on, the optional prepolymer is deemed to form part of the LMW component.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is silica supported ZN catalyst.

The Ziegler-Natta catalyst further preferably comprises a group 4 (group numbering according to new IUPAC system) metal compound, preferably titanium, magnesium dichloride and aluminium.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable Ziegler - Natta catalysts contains a titanium compound together with a magnesium halide compound acting as a support. Thus, the catalyst contains a titanium compound on a magnesium dihalide, like magnesium dichloride. Such catalysts are disclosed, for instance, in WO 2005/118655 and EP 810235.

The resulting end product consists of an intimate mixture of the polymers from the two or more reactors, the different molecular-weight-distribution curves of these polymers together forming a molecular-weight-distribution curve having a broad maximum or two or more maxima, i.e. the end product is a bimodal or multimodal polymer mixture.

It is preferred that the carrier polymer is a bimodal polyethylene consisting of components (A) and (B), optionally further comprising a small prepolymerisation component in the amount as described above which is deemed a part of the LMW component. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 100 to 800 moles of H2/kmoles of ethylene are added to the reactor, when the LMW component is produced in this reactor, and 50 to 500 moles of H2/kmoles of ethylene are added to the gas phase reactor when this reactor is producing the HMW component.

The amount of carrier polymer in the masterbatch may be at least 40 wt%, such as at least 45 wt%, more preferably at least 49 wt%. In some embodiments, the carrier polymer forms 50 to 80 wt% of the masterbatch.

More preferably, the carrier polymer will form between 1 to 5 wt% of the eventual polymer composition.

**Pigment**

The masterbatch also contains at least one pigment. The pigment is an inorganic pigment or an organic pigment or a mixture thereof. More preferably, the pigment is inorganic. Most preferably the pigment is carbon black.

The type of carbon black employed in the masterbatch of the invention is not particularly critical and different types of carbon black such as furnace black, acetylene black and Ketjen black can be used. These carbon blacks are well-known in the art. Whilst a mixture of different carbon blacks could be used it is preferred if a single carbon black is employed, such as furnace black.

The amount of carbon black included in the master batch depends on the amount of carbon black which is desired to incorporate into the final polymer composition and also on the amount of carbon black possible to include in the masterbatch. Generally, the amount of carbon black in the master batch lies in the range of from 20 to 50 wt%, more preferably from 30 to 50 wt%, more preferably 35 to 45 wt%.

These levels of carbon black in the masterbatch are designed to allow a polymer composition containing said masterbatch to achieve of the order of 1 to 5% by weight, preferably 1 to 4 wt%, more preferably 2 to 2.5% by weight of carbon black in the polymer composition.

The masterbatch may also include other standard polymer additives. The masterbatch might include up to about 5% by weight, preferably about 0.3-5% by weight, and more preferably about 0.3-4% by weight of additives. These additives include stabilising additives such as antioxidants to counteract decomposition due to oxidation, radiation, etc., nucleating agents, antistatic agents, other fillers than pigment as defined above, etc.

In the production of the masterbatch of the present invention, a compounding step is preferably employed wherein the carrier polymer and pigment are melt extruded in an extruder and then pelletised to masterbatch pellets in a manner known in the art.

Optionally, and typically, additives other than the pigment can be added to the masterbatch during the compounding step in the amount as described above.

The masterbatch of the invention may in theory also contain other polymer components such as other HDPEs or other polymers such as LLDPE or LDPE. However, this is not preferred. In one embodiment, the masterbatch consist essentially of the carrier polymer and the pigment. The term consists essentially of means that the carrier polymer and pigment are the only "non additive" components present. It will be appreciated therefore that the masterbatch may contain other standard polymer additives.

**Base resin**

The masterbatches of the invention are designed to be combined with a base resin in order to introduce a desired amount of pigment such as carbon black to that base resin. The combination of the masterbatch and the base resin forms the polymer composition of the invention.

The nature of the base resin used will depend on the desired end use of the polymer composition that is formed, e.g. whether for film, cable or pipe application. The base resin is more preferably one known for use in pipe applications in particular pressure pipe applications.

The base resin is preferably a unimodal or multimodal ethylene homopolymer or copolymer, preferably a multimodal ethylene homopolymer or copolymer, especially a multimodal ethylene copolymer. Similarly with the carrier polymer of the masterbatch, by ethylene copolymer is meant herein that at least one component of the multimodal ethylene copolymer is a copolymer of ethylene with comonomer(s) other than ethylene, wherein the majority by weight of polymer derives from ethylene monomer units. The comonomer contribution preferably is up to 10% by mol, more preferably up to 5 % by mol, based on the total amount of monomer(s) present in the multimodal ethylene copolymer as the base resin. Preferably, the lower limit of the comonomer present in the multimodal ethylene copolymer as the base resin of the present invention is 0.1 to 5 mol%.

The base resin may comprise ethylene and at least one other copolymerisable monomer or monomers, preferably C3-20, especially C3-10, alpha olefin comonomers, particularly singly or multiply ethylenically unsaturated comonomers, in particular C3-10-alpha olefins such as propene, but-1-ene, hex-1-ene, oct-1-ene, and 4-methyl-pent-1-ene. The use of hexene and butene is particularly preferred. More preferably there is only one comonomer present.

It is preferred if the base resin is a copolymer and of ethylene and one comonomer only. More preferably that comonomer is 1-butene.

The base resin preferably has an $MFR_5$ of 0.1 to 5.0, more preferably 0.15 to 5.0 g/10 min

The base resin preferably has an $MFR_{21}$ of 5 to 100 g/10min, more preferably 10 to 50 g/10 min.

The density of the base resin is preferably 930 to 958 $kg/m^3$, more preferably 935 to 955 $kg/m^3$, especially 940 to 955 $kg/m^3$

As already mentioned above, the base resin is preferably a multimodal polyethylene copolymer. The term multimodal is defined above in relation to the carrier polymer and that definition also applies to the base resin although the base resin is preferably different from the carrier polymer.

The base resin is multimodal and therefore comprises at least two components. The base resin preferably comprises:

(C) a lower weight average molecular weight first ethylene homo- or copolymer component (LMW component), and
(D) a higher weight average molecular weight second ethylene copolymer component (HMW component).

The LMW component (C) has a lower Mw than the HMW component (D). It is generally preferred if the higher molecular weight component has an Mw of at least 5000 more than the lower molecular weight component, such as at least 10,000 more.

It will be appreciated that the molecular weight and molecular distribution of the polymers of the invention is important. The base resin polymer preferably has a molecular weight distribution Mw/Mn, being the ratio of the weight average molecular weight Mw and the number average molecular weight Mn, of 10 or more, more preferably of 12 or more, still more preferably of 14 or more.

The base resin preferably has an Mw/Mn of 40 or below, more preferably of 35 or below, more preferably 7 to 40, even more preferably 10 to 35.

The weight average molecular weight Mw of the polymer preferably is at least 50 kg/mol, more preferably at least 80 kg/mol, and most preferably at least 100 kg/mol. Furthermore, the Mw of the composition preferably is at most 300 kg/mol, more preferably 275 kg/mol.

As noted above, the base resin preferably comprises a LMW component (C) and a HMW component (D). The weight ratio of the LMW component (C) to the HMW component (D) in the composition is in the range 30:70 to 70:30, more preferably 35:65 to 65:35, most preferably 40:60 to 60:40.

LMW and HMW components (C) and (D) may both be ethylene copolymers or one may be an ethylene homopolymer. In one preferable embodiment, the base resin comprises an ethylene homopolymer as the LMW component (C). In another preferable embodiment, the base resin comprises an ethylene copolymer as the LMW component (C). Most preferably the base resin comprises an ethylene homopolymer component (C). Even more preferably the HMW component (D) is an ethylene copolymer.

Where one of the components (C) or (D) is an ethylene homopolymer, this is preferably the component with the lower weight average molecular weight (Mw), i.e. component (C). Most preferred polymer is therefore a lower molecular weight homopolymer component (C) with a higher molecular weight ethylene copolymer component (D), which is most preferably an ethylene 1-butene higher molecular weight component (D).

The LMW component (C) preferably has an $MFR_2$ of 10 g/10min or higher, more preferably of 50 g/10min or higher, and most preferably 100 g/10min or higher.

Furthermore, component (C) preferably, has an $MFR_2$ of 1000 g/10 min or lower, preferably 800 g/10 min or lower, and most preferably 700 g/10min or lower.

Preferably, component (C) is an ethylene homo- or copolymer with a density of at least 965 kg/m$^3$, such as 970 to 975 kg/m$^3$.

Most preferably, component (C) is an ethylene homopolymer. If component (C) is a copolymer, the comonomer is preferably 1-butene.

Preferably, component (D) is an ethylene copolymer with a density of less than 950 kg/m$^3$.

Most preferably, component (D) is a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

As noted above, features of components (C) and/or (D) are generally valid for the cases in which they can be directly measured on the respective component, e.g. when the component is separately produced or produced in the first stage of a multistage process. However, the composition may also be and preferably is produced in a multistage process wherein e.g. components (C) and (D) are produced in subsequent stages. In such a case, the properties of the components produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the component is produced, and by using a catalyst on which no previously produced polymer is present. Alternatively, the properties of the components produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13. These techniques are described above with reference to the carrier polymer.

A base resin can be manufactured following the principles outlined above in relation to the carrier polymer. The preferred embodiments described above in relation to the polymer process apply equally to the manufacture of the base resin.

The base resin may also include standard polymer additives. The base resin might include up to about 5% by weight, preferably about 0.3-5% by weight, and more preferably about 0.3 to 4% by weight of additives. These additives include stabilising additives such as antioxidants to counteract decomposition due to oxidation, radiation, etc., nucleating agents, antistatic agents, etc.

Most preferably the base resin consists of the LMW component (C) and HMW component (D), and optional additives.

**Final Polymer composition:**

The final polymer composition is prepared by combining at least the masterbatch and the base resin by melt mixing in an extruder to form pellets of the final polymer composition. These pellets can be used for producing an article, preferably an article as defined above or below. Alternatively, the final polymer composition is prepared by combining at least the masterbatch and the base resin by melt mixing in an extruder during the actual formation of the desired polymer article.

Melt mixing means herein mixing the base resin and the masterbatch at elevated temperature, wherein at least one of the base resin and carrier polymer of the masterbatch, preferably both, are in a molten state.

Accordingly, mixing preferably occurs in an extruder where the base resin powder from the reactor and the masterbatch, together with the optional further additives, are extruded in an extruder to form pellets of the final polymer composition. Such pellets are suitable for producing a desired article in a manner known in the art.

The masterbatch may form up to 20 wt% of the final polymer composition such as 1 to 15 wt%, more preferably 1 to 10 wt% of the polymer composition. In one embodiment, the amount of the carrier polymer is 1 to 10 wt% based on the total amount of the polymer composition (100 wt%), such as 1 to 7 wt%, preferably 1 to 6 wt%.

The base resin forms at least 80wt% of the final polymer composition, more preferably at least 85 wt% of the polymer composition, such as at least 89 wt% of the polymer composition.

The polymer composition of the invention preferably has a density of 940 to 968 $kg/m^3$, more preferably 945 to 965 $kg/m^3$, especially 950-965 $kg/m^3$.

The amount of pigment, preferably carbon black, as such (neat) present in the final composition is preferably 1.0 to 10 wt%, more preferably in an amount of 1.5 to 9.0 wt%, most preferably in an amount of 1.8 to 8.0 wt%, preferably 1.8 to 7.0 wt%, based on the total amount of the polymer composition (100 wt%).

The final polymer compostion has $MFR_5$ of 0.18 to 5.0, preferably 0.18 to 4.0, g/10 min.

The final polymer composition preferably has an Eta747 of 10,000 to 1,000, 000 Pas.

The polymer composition may also be combined with other polyethylene polymers such as other polymers of the invention, with other HDPEs or with other polymers such as LLDPE or LDPE. Most preferably the final polymer composition consists of the base resin, masterbatch and optional further additives (i.e. other than the pigment present in the masterbatch).

**Article**

The polymer composition of the invention may be used in the manufacture of pipes, in the manufacture of a layer of a cable, preferably a jacketing layer of a cable, or in film production, such as blown or cast film production.

Most preferably the polymer composition can be used to manufacture a pipe, preferably a pressure pipe.

Where the article is a pipe, preferably a pressure pipe, then in a preferred embodiment, the $MFR_5$ of the final polymer composition is 0.18 to 5.0 g/10min, preferably 0.18 to 4.0 g/10min, more preferably 0.18 to 2.5 g/10min, most preferably 0.18 to 1.5 g/10min.

Where the article is a pipe, preferably a pressure pipe, it is especially preferred if the density of the base resin is 940-953 $kg/m^3$ such as 940-951 $kg/m^3$.

Where the article is a pipe, preferably a pressure pipe, then in a preferred embodiment it is preferred if the Eta 747 of the polymer composition is 200,000 Pas or less.

Where the article is a pipe, preferably a pressure pipe, then in a preferred embodiment, the ratio of components in the base resin is 52 to 58 wt% of the HMW component (D) and 48 to 42 wt% LMW component (C).

Where the article is a pipe, preferably a pressure pipe, then in a preferred embodiment, the pipe has preferably Eta747 of 70,000 Pas or more, preferably 102,000 Pas or more, preferably 110,000 Pas or more, more preferably 115,000 Pas or more, especially 120,000 Pas. The upper limit of Eta747 is preferably up to 1,000, 000 Pas.

Where the article is a pipe, preferably a pressure pipe, then in a preferred embodiment, the pipe has preferably a charpy notched impact strength at 23°C of at least 20 $kJ/m^2$. Charpy notched impact strengths at -20°C are preferably at least 6 $kJ/m^2$, preferably 7 $kJ/m^2$.

The invention will now be described with reference to the following non limiting examples and figures.

Figure 1 shows a theoretical sagging pipe.

**Analytical tests**

Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

Density

Density of the polymer was measured according to ISO 1183-1:2004 Method A on compression moulded specimen prepared according to EN ISO 1872-2 (Feb 2007) and is given in $kg/m^3$.

Molecular weight

Molecular weight averages, molecular weight distribution (Mn, Mw, MWD)
Molecular weight averages (Mw and Mn), Molecular weight distribution (MWD) and its broadness, described by MWD= Mw/Mn (wherein Mn is the number average molecular weight and Mw is the weight average molecular weight) were determined by Gel Permeation Chromatography (GPC) according to ISO 16014-1 :2001 ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.
A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 $\mu$L of sample solution was injected per analysis. Data collection was performed using either Agilent Cirrus software version 3.3 or PolymerChar GPC-IR control software.
The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$K_{PS}$ = 19 x 10$^{-3}$ mL/g, $\alpha_{PS}$ = 0.655
$K_{PE}$ = 39 x 10$^{-3}$ mL/g, $\alpha_{PE}$ = 0.725
$K_{PP}$ = 19 x 10$^{-3}$ mL/g, $\alpha_{PP}$ = 0.725

A third order polynomial fit was used to fit the calibration data.
All samples were prepared in the concentration range of 0,5 -1 mg/ml and dissolved at 160 °C for 2.5 hours for PP or 3 hours for PE under continuous gentle shaking.

**Rheology**

The characterization of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T °C (T by 230 °C for PP and 190°C for PE) applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
$t$ is the time

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$", and the loss tangent, tan $\eta$, which can be expressed as follows:

$$G' = \frac{\sigma_0}{\gamma_0}\cos\delta \qquad [\text{Pa}] \qquad (3)$$

$$G'' = \frac{\sigma_0}{\gamma_0}\sin\delta \qquad [\text{Pa}] \qquad (4)$$

$$G^* = G' + iG'' \qquad [\text{Pa}] \qquad (5)$$

$$\eta^* = \eta' - i\eta'' \qquad [\text{Pa.s}] \qquad (6)$$

$$\eta' = \frac{G''}{\omega} \qquad [\text{Pa.s}] \qquad (7)$$

$$\eta'' = \frac{G'}{\omega} \qquad [\text{Pa.s}] \qquad (8)$$

Besides the above mentioned rheological functions one can also determine other rheological parameters such as the so-called elasticity index *El(x)*. The elasticity index *El(x)* is the value of the storage modulus, G' determined for a value of the loss modulus, G" of x kPa and can be described by equation 9.

$$EI(x) = G' \; for \; (G'' = x \, kPa) \qquad [Pa] \qquad (9)$$

For example, the EI(5kPa) is the defined by the value of the storage modulus G', determined for a value of G" equal to 5 kPa.
The determination of so-called Shear Thinning Indexes is done, as described in equation 10.

$$SHI(x/y) = \frac{Eta^* \; for \; (G^* = x \, kPa)}{Eta^* \; for \; (G^* = y \, kPa)} \qquad [Pa] \qquad (10)$$

For example, the SHI (2.7/210) is defined by the value of the complex viscosity, in Pa.s, determined for a value of G* equal to 2.7 kPa, divided by the value of the complex viscosity, in Pa.s, determined for a value of G* equal to 210 kPa.
The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- *Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995
[3] Definition of terms relating to the non-ultimate mechanical properties of polymers, Pure & Appl. Chem., Vol. 70, No. 3, pp. 701-754, 1998

**Eta 747 Pa (Sagging):**

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.
The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. An 1.2 mm thick polymer sample is inserted between the plates. The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.
The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.
The **degree of pigment, especially carbon black, "Dispersion"** was measured according ISO 18 553/2002-03-01 as follows:

Pellets of the composition which are obtained after the applicable compounding step are analysed by collecting 6 different pellets where from each pellet, one cut is used (thickness cut 15±2 μm). The cut for the measurement of the rating should be taken near the middle of the pellet (sample) with rotation microtome Type Leica RM2265. Preferably, the cut is in flow direction of the melt through the whole of the pelletizer.

The cuts are evaluated at a magnification of 40x and the size and the number of the particles on the total area of each cut are determined. All particles with a diameter of > 5 $\mu$m are counted. Transmission light microscope Leica DM5500B, with Leica Application Suite Software was used for imaging and particle size measurements. The lower the composition is rated in this test, the better is the dispersion of the composition.

**Charpy impact strength** was determined according to ISO179/1eA:2000 on V-notched samples of 80x10x4 mm$^3$ 23°C (Charpy impact strength (0°C)) and at - 20°C (Charpy impact strength (-20°C)). Samples were cut from plaques of 4 mm thickness prepared by compression molding according to ISO 293:2004 using the conditions defined in chapter 3.3 of ISO 1872-2:2007.

**Tensile Properties: tensile modulus (23 °C)**

As a measure for stiffness, the tensile modulus (E-modulus) of the compositions was measured at 23 °C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

The tensile strength, including tensile stress at yield, strain at yield and elongation at break (i.e. tensile strain at break) is measured according to ISO 527-1 (cross head speed 50 mm/min) at a temperature of 23 °C.

**Pressure test on notched pipes (NPT); Slow crack propagation resistance**

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 $\pm$ 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 $\pm$ 1 mm.

$$h = 0.5 \left[ d_{em} - \sqrt{(d_{em}^2 - b_S^2)} \right] + 0.866\, b_S$$

where

$b_s$     is the width of machined surface of the notch in mm;
$d_{em}$     is the measured mean pipe outside diameter in mm.

**Rapid crack propagation**

The rapid crack propagation (RCP) resistance of a pipe may be determined according to a method called the S4 test (Small Scale Steady state), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurised internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/- 1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test, i.e. the crack propagation exceeds 4.7 times the pipe diameter. The critical temperature (Tcrit) i.e. the ductile brittle transition temperature as measured according to ISO 13477:2008 is the lowest temperature at which the pipe passes the test. The lower the critical temperature the better, since it results in an extension of the applicability of the pipe.

**Pressure test on un-notched pipes (PT); resistance to internal pressure**

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 5.6 MPa at a temperature of 80°C and at a hoop stress at 5.7 MPa tested at a temperature of 80°C was applied.

**Examples**

**A. Inventive Carrier polymer for the MB: the polymerisation of the polyethylene polymers:**

I. Preparation of the catalyst

Complex preparation:

87 kg of toluene was added to the reactor. Then 45.5 kg BOMAG-A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

Solid catalyst component preparation:

275 kg silica (ES747JR of Crossfield, having an average particle size of 20 $\mu$m) activated at 600°C in nitrogen was charged into a catalyst preparation reactor. Then, 411 kg 20% EADC (2.0 mmol/g silica) diluted in 555 liters pentane was added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) was added at 23°C during ten minutes. 86 kg pentane was added into the reactor at 22°C during 10 minutes. The slurry was stirred for 8 hours at 50°C. Finally, 52 kg TiCl$_4$ was added during 0.5 hours at 45°C. The slurry was stirred at 40°C for five hours. The catalyst was then dried by purging with nitrogen.

II. Polymerisation:

Into a first loop reactor, having a volume of 50 dm$^3$ and operating at a temperature and pressure given in the table 1, propane (C3), ethylene (C2) and hydrogen (H2) were introduced for conducting a pre-polymerization step. Additionally, the solid polymerisation catalyst component obtained as described above under I was added. Catalyst preparation I was introduced into the reactor together with triethylaluminium cocatalyst. The polymerisation conditions and feeds are given in table 1.
The slurry was withdrawn intermittently from the prepolymerization reactor and directed to a second loop reactor having a volume of 500 dm$^3$ and operating at a temperature and pressure given in the table 1. Additionally, propane, ethylene and hydrogen were fed to the second loop reactor. The reaction conditions and feeds, the production split, the density and melt index of the polymer fractions produced in this second loop reactor are listed in table 1.
The slurry was withdrawn intermittently from the second loop reactor by using settling legs and directed to a gas phase reactor. The gas phase reactor was operated at a temperature and pressure given in table 1. Additional ethylene, 1-butene comonomer, and hydrogen were fed to the reactor. The reactor conditions, feeds as well as the production split of the obtained polymers withdrawn from the gas phase reactor are listed in table 1.
The resulting polymer was purged with nitrogen (about 50 kg/h) for one hour, stabilised with commercial processing and long term stabilisers, as well as with commercial acid scavenger, Ca-stearate, and then extruded to pellets in a counter-rotating twin screw extruder CIM90P (manufactured by Japan Steel Works). The temperature profile in each zone was 90/120/190/250 °C.

Table 1: Polymersisation details of inventive carrier polymers:

| | | Carrier 1 | Carrier 2 | Carrier 3 | Carrier 4 |
|---|---|---|---|---|---|
| **Pre-loop reactor** | | | | | |
| Temperature (°C) | | 70 | 70 | 70 | 70 |
| Pressure (kPa) | | 6235 | 6213 | 6226 | 6172 |
| C2 feed (kg/h) | | 2 | 2 | 2 | 2 |
| Propane feed (kg/h) | | 46.2 | 47.7 | 47.7 | 47.7 |
| Catalyst feed (g/h) | | 6.6 | 5.8 | 4.6 | 7 |
| Cocatalyst (TEAL) feed, g/h | | 2.5 | 1.8 | 1.7 | 3.5 |
| Production rate (kg/h) | | 1.9 | 1.9 | 1.9 | 1.9 |
| | | | | | |
| **Reactor 1 - Loop** | | | | | |
| Temperature (°C) | | 95 | 95 | 95 | 95 |
| Pressure (kPa) | | 5973 | 5977 | 5966 | 5869 |
| C2 concentration (mol%) | | 4.4 | 5.5 | 5.1 | 4.4 |
| H2/C2 ratio (mol/kmol) | | 431 | 298 | 168 | 160 |
| Production rate (kg/h) | | 48.4 | 38 | 38.2 | 48.6 |
| MFR2, g/10 min | | 585 | 192 | 40 | 44 |
| Split %* | | 54 | 40 | 40 | 55 |
| Density, kg/m$^3$ | | 972 | 972 | 970 | 970 |
| **Reactor 2 - Gas Phase** | | | | | |
| Temperature (°C) | | 85 | 85 | 85 | 85 |
| Pressure (kPa) | | 2000 | 2000 | 2000 | 2000 |
| C2 concentration (mol%) | | 10.3 | 19.5 | 18.1 | 9.8 |
| H2/C2 ratio (mol/kmol) | | 205 | 153 | 212 | 225 |
| C4/C2 ratio (mol/kmol) | | 71.5 | 58.4 | 56.9 | 64.7 |
| Production rate (kg/h) | | 42.4 | 60.5 | 60.6 | 42.2 |
| Split % | | 46 | 60 | 60 | 45 |
| | | | | | |
| **Final carrier polymer (pellets)** | | | | | |
| Final MFR2 (g/10 min) | | 8.5 | 2.1 | 3.4 | 6.2 |
| Final density (kg/m$^3$) | | 958.4 | 953.2 | 953.4 | 957 |
| Final MFR2/MFR2 of loop (g/10 min) | | 0.015 | 0.011 | 0.085 | 0.14 |
| * combined amount of prepolymer and loop polymer | | | | | |

Table 2: Properties of the inventive and comparative carrier polymers

| Carrier polymer (pellets) | | MFR$_2$, g/10 min | Density, kg/m$^3$ | Mw/Mn | Mw. Kg/mol |
|---|---|---|---|---|---|
| Comp.carrier | unimodal | 12 | 962 | 4.6 | 55 |
| Carrier 1 | bimodal | 8.5 | 958.4 | 11.0 | 73 |

(continued)

| Carrier polymer (pellets) | | MFR$_2$, g/10 min | Density, kg/m$^3$ | Mw/Mn | Mw. Kg/mol |
|---|---|---|---|---|---|
| Carrier 2 | bimodal | 2.1 | 953.2 | 9.1 | 93 |
| Carrier 3 | bimodal | 3.4 | 953.4 | 6.7 | 85 |
| Carrier 4 | bimodal | 6.2 | 957 | 8.1 | 76 |

## B. Production of the inventive and comparative masterbatches (MB)

The masterbatches, i.e. inventive MB with bimodal carrier polymer and comparative MB with unimodal carrier polymer, were produced by combining the comparative or inventive carrier polymer with a carbon black (commercial carbon black, Elftex TP)

The compounding was carried out in a BUSS kneader MDK/E 46-B. The extruder was operated at screw speed of 100 rpm and 10 kg/h throughput rate. The temperature profile was 140-170-170-150°C. The compounding can also be carried out in a conventional twin screw counter-rotating or co-rotating extruder.

Carbon black (CB) loading was 40 wt.% and was split-fed in the extruder by two side feeders. Irganox 1010 was used as a stabiliser at a loading of 0.1%. The balance was the carrier polymer. The masterbatches were pelletized by using strand-or underwater pelletizing systems.

## C. Production of the polymer compositions

Base resins which were representative pressure pipe materials, namely MDPE (conventional natural bimodal medium density polyethylene with density of 942 kg/m$^3$ and MFR$_5$ of 0.8 g/10 min) and HDPE (conventional natural bimodal medium density polyethylene with density of 950 kg/m$^3$ and MFR$_5$ of 0.25 g/10 min), were compounded with the inventive and comparative MBs (produced as described above under B) to obtain inventive and comparative polymer compositions.

The compounding was carried out in a Coperion ZSK 18 lab-scale twin screw extruder at a feed rate of 4 kg/hr and screw speed of 200rpm. The temperature profile was 180°C -220°C -230°C and was kept at 230°C at the remaining zones.

Table 3: The amounts of base resin and MB as well as properties of the produced polymer compositions

| Polymer composition (PC) | Formulation | MFR$_5$, g/10 min | Density, kg/m$_3$ | CB content, wt. % | CB dispersion rating |
|---|---|---|---|---|---|
| Comp.PC1 | 94.18 wt.% HDPE+5.82 wt.% MB of Comp.carrier | 0.33 | 963.5 | 2.18 | 0.5 |
| Inv.PC1 | 94.18 wt.% HDPE+5.82 wt.% MB of carrier 1 | 0.32 | 963.3 | 2.16 | 0.5 |
| Inv.PC2 | 94.18 wt.% HDPE+5.82 wt.% MB of carrier 4 | 0.32 | 963 | 2.11 | 0.7 |
| Inv.PC3 | 94.18 wt. % HDPE+5.82 wt.% MB carrier 3 | 0.34 | 962.5 | 2.29 | 0.8 |
| Inv.PC4 | 94.18 wt.% HDPE+5.82 wt.% MB of carrier 2 | 0.34 | 962.8 | 2.21 | 0.6 |
| | | | | | |
| Comp.PC2 | 94.18 wt.% MDPE+5.82 wt.% of Comp.carrier | 0.84 | 955.3 | 2.16 | 0.7 |
| Inv.PC5 | 94.18 wt.% MDPE+5.82 wt.% MB of carrier 1 | 0.71 | 955.1 | 2.1 | 1.0 |
| Inv.PC6 | 94.18 wt.% MDPE+5.82 wt.% MB of carrier 4 | 0.71 | 955 | 2.12 | 0.7 |

(continued)

| Polymer composition (PC) | Formulation | MFR$_5$, g/10 min | Density, kg/m$_3$ | CB content, wt. % | CB dispersion rating |
|---|---|---|---|---|---|
| Inv.PC7 | 94.18 wt.% MDPE+5.82 wt.% MB of carrier 3 | 0.72 | 955 | 2.21 | 0.8 |
| Inv.PC8 | 94.18 wt.% MDPE+5.82 wt.% MB of carrier 2 | 0.71 | 954.8 | 2.2 | 0.8 |
| The results show the good dispersion results. | | | | | |

Table 4: Mechanical property data the polymer compositions

| PC | Formulation | Tensile Modulus (MPa) | TS at yield (MPa) | TS at break (Mpa) | Elongation, at break (%) | Charpy notched at 23 C (kJ/m2) | Charpy notched at -20 C (kJ/m2) |
|---|---|---|---|---|---|---|---|
| Comp.PC2 | 94.18 wt.% MDPE+5.82 wt.% of Comp.carrier | 862 | 24.1 | 23.8 | 670 | 24.9 | 7.6 |
| Inv.PC5 | 94.18 wt.% MDPE+5.82 wt.% of carrier 1 | 877 | 23.9 | 23.5 | 660 | 25.4 | 8 |
| Inv.PC6 | 94.18 wt.% MDPE+5.82 wt.% of carrier 4 | 884 | 24.5 | 24.1 | 680 | 25.3 | 7.9 |
| Inv.PC7 | 94.18 wt.% MDPE+5.82 wt.% MB of carrier 3 | 852 | 24.3 | 23.8 | 660 | 24.8 | 8.4 |
| Inv.PC8 | 94.18 wt.% MDPE+5.82 wt.% MB of carrier 2 | 860 | 25.8 | 25.2 | 690 | 25.1 | 7.9 |

Table 5: Eta 747 properties (indication of the sagging property)

| PC | Formulation | Eta 747, Pa.s |
|---|---|---|
| Comp.PC2 | 94.18 wt.% MDPE+5.82 wt.% Comp.carrier | 101100 |
| Inv.PC5 | 94.18 wt.% MDPE+5.82 wt.% MB of carrier 1 | 122680 |
| Inv.PC6 | 94.18 wt.% MDPE+5.82 wt.% MB of carrier 4 | 125900 |
| Inv.PC7 | 94.18 wt.% MDPE+5.82 wt.% MB of carrier 3 | 127820 |
| Inv.PC8 | 94.18 wt.% MDPE+5.82 wt.% MB of carrier 2 | 125450 |

The Eta 747 results correlate to improved melt strength which is required for minimising sagging

**D. Production of Test pipes**

Test Pipes were produced on a single screw extruder Krauss Maffei KME45-36B. The temperature along the extruder and die was 200-220 degs. Line speed - 1 m/min. The specific energy input is between 0,17 to 0,25 kWh/kg depending on the polymer. Melt pressures measured at the die are ~ 130-200 Bar depending on the polymer.

Test pipe 1:

| Wall thickness: | 10 mm |
|---|---|
| Diameter: | 110 mm |

Test pipe 2:

| Wall thickness: | 3 mm |
|---|---|
| Diameter: | 32 mm |

Test pipe 1 samples were used for NPT and RCP determinations.
Test pipe 2 samples were used for HPT determination.

Table 6: Pipe test results for pipe samples of the polymer compositions

| PC | Formulation | Notched pressure test (NPT), 4.6MPa, °C, hrs** | Rapid crack propagation test (RCP), Critical temp, °C | Hydrostatic Pressure test (HPT), hrs |
|---|---|---|---|---|
| Comp.PC2 | 94.18 % MDPE+5.82wt.% MB of Comp.carrier | 3230 | 4 | 685(4.6MPa) |
| Inv.PC5 | 94.18 % MDPE+5.82 wt.% MB of carrier 1 | 2350 | 5.6 | 350(4.6MPa) |
| Inv.PC7 | 94.18 % MDPE+5.82wt.% MB of carrier 3 | 3270 | 3.2 | 1700(4.6MPa) |
| Inv.PC8 | 94.18 % MDPE+5.82wt.% MB of carrier 2 | 2255 | 3.2 | 350(4.6MPa) |
| Comp.PCl | 94.18 % HDPE+5.82wt.% MB of Comp.carrier | 1872 | n/a | 490(5.7MPa) |
| Inv.PC1 | 94.18 % HDPE +5.82 wt.% M B of carrier 1 | 2900 | n/a | 630(5.7MPa) |
| Inv.PC3 | 94.18% HDPE+5.82wt.% MB of carrier 3 | 1872 | n/a | 270(5.7MPa) |
| Inv.PC4 | 94.18 % HDPE+5.82wt.% MB of carrier 2 | 2550 | n/a | 800(5.7MPa) |
| ** the test is on-going, thus the hours are more than the hours given in the table. | | | | |

The mechanical property values showing that values when using bimodal carrier and unimodal carrier are comparable in the final pipe compounds. The use therefore of a bimodal carrier surprisingly offers benefit in terms of sagging resistance without any loss of other valuable properties.

**Claims**

1. A masterbatch (MB) comprising, preferably consisting of,

(I) 20-50 wt% pigment based on the total amount of the masterbatch (100 wt%);
(II) at least 40 wt% of at least one carrier polymer which is a multimodal high density polyethylene (HDPE) polymer having an $MFR_2$ of 1 to 20 g/10 min, a density of 940 to 965 kg/m$^3$ (preferably 950 to 960 kg/m$^3$) and a Mw/Mn of 5.5 to 20; and
(III) optionally further additives.

**2.** A masterbatch as claimed in claim 1 wherein said pigment is carbon black.

**3.** A masterbatch as claimed in any preceding claim wherein the HDPE carrier polymer is bimodal.

**4.** A masterbatch as claimed in any preceding claim wherein the carrier polymer has an $MFR_2$ of 1.5 to 15 g/10min, preferably 1.8 to 10 g/10min.

**5.** A masterbatch as claimed in any preceding claim wherein the multimodal HDPE comprises a LMW homopolymer component (A) and a HMW copolymer component (B), preferably an ethylene butene copolymer component (B).

**6.** A masterbatch as claimed in claim 5 wherein the ratio of the $MFR_2$ of the carrier polymer to the $MFR_2$ of the LMW homopolymer component (A) is 0.005 to 0.2.

**7.** A masterbatch as claimed in claim 5 or 6 wherein the multimodal HDPE comprises a LMW homopolymer component (A) and a HMW copolymer component (B), and wherein the weight ratio of component (A) to component (B) within the carrier polymer is 30:70 to 70:30.

**8.** A polyethylene composition suitable for pipe, a layer of a cable or film layer applications, preferably suitable for pipe applications, comprising, preferably consisting of,

> (i) at least 80 wt% of a base resin which comprises, preferably consists of, a polyethylene polymer having $MFR_5$ of 0.05 to 5.0 g/10min and a density of 920-960 kg/m$^3$, preferably 940 to 955 kg/m$^3$; and
> (ii) at least 1 wt% of masterbatch as claimed in claims 1 to 7;

wherein the polyethylene composition has a density of 930 to 970 kg/m$^3$.

**9.** A polyethylene composition suitable for pipe, a layer of a cable and film applications, preferably suitable for pipe applications) comprising, preferably consisting of,

> (i) at least 80 wt% of a base resin which comprises, preferably consists of, a polyethylene polymer having $MFR_5$ of 0.05 to 5.0 g/10min and a density of 920 to 960 kg/m$^3$ preferably 940 to 955 kg/m$^3$; and
> (ii) a masterbatch comprising a pigment and at least one carrier polymer which is a multimodal high density polyethylene (HDPE) polymer having an $MFR_2$ of 1 to 20 g/10 min, density of 940 to 965 kg/m$^3$ and a Mw/Mn of 5.5 to 20;

wherein the polyethylene composition has a density of 930 to 970 kg/m$^3$ and wherein the polyethylene composition comprises 1 to 10 wt% of pigment.

**10.** A polyethylene composition as claimed in any one of claims 8 to 9 wherein the base resin polyethylene polymer is multimodal, preferably bimodal.

**11.** A polyethylene composition as claimed in any one of claims 8 to 10 wherein the base resin polyethylene polymer is a copolymer.

**12.** A polyethylene composition as claimed in any one of claims 8 to 11 wherein the polymer composition comprises 1 to 10 wt% masterbatch.

**13.** A polyethylene composition as claimed in any one of claims 8 to 12 wherein the pigment, preferably carbon black, forms 1.8 to 7.0 wt% of the polymer composition.

**14.** A polyethylene composition as claimed in any one of claims 8 to 13 wherein the base resin polyethylene polymer is a multimodal HDPE comprising a homopolymer component (C) and a copolymer component (D), preferably an ethylene butene copolymer component or ethylene hexene copolymer component (D).

**15.** An article comprising, preferably consisting of, the polyethylene composition as claimed in claims 8 to 14, preferably a pipe, a layer of a cable (e.g. the jacketing layer) or a film layer, especially a pipe, most especially a pressure pipe.

**16.** A process for the formation of a masterbatch as claimed in claims 1 to 7 comprising blending

(I) 20-50 wt% of a pigment;
(II) at least 40 wt% of at least one carrier polymer which is a multimodal high density polyethylene (HDPE) polymer having an $MFR_2$ of 1 to 20 g/10 min, density of 940 to 965 kg/m$^3$ and a Mw/Mn of 5.5 to 20; and

melt compounding the same.

17. A process for the preparation of a polyethylene composition as claimed in claims 8 to 14 comprising blending a masterbatch as claimed in claim 1 to 7 with at least 80 wt% of a base resin which comprises, preferably consists of, a polyethylene polymer having $MFR_5$ of 0.05 to 5.0 g/10min and a density of 920 to 960 kg/m$^3$; and melt compounding the same.

Figure 1.

Europäisches
Patentamt

European
Patent Office

Office européen
des brevets

# EUROPEAN SEARCH REPORT

Application Number

EP 13 19 9824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/058200 A1 (CABOT CORP [US]; PIERRE SANTIAGUE [BE]; THIELEN ALAIN [BE]; CAMMARATA) 3 May 2012 (2012-05-03) * abstract * | 1-17 | INV. C08J3/22 C08L23/06 F16L9/12 |
| A | WO 99/57193 A1 (BOREALIS AS [DK]; PALMLOEF MAGNUS [SE]) 11 November 1999 (1999-11-11) * abstract * | 1-17 | |
| A | WO 2013/060736 A1 (BOREALIS AG [AT]) 2 May 2013 (2013-05-02) * abstract * | 1-17 | |
| A | WO 00/22040 A1 (BOREALIS POLYMERS OY [FI]; BAECKMAN MATS [SE]; HEINO EEVA LEENA [FI];) 20 April 2000 (2000-04-20) * abstract * | 1-17 | |

| TECHNICAL FIELDS SEARCHED (IPC) |
|---|
| C08J C08L F16L |

The present search report has been drawn up for all claims

| Place of search | Date of completion of the search | Examiner |
|---|---|---|
| Munich | 8 April 2014 | Ansorge, Markus |

EPO FORM 1503 03.82 (P04C01)

## ANNEX TO THE EUROPEAN SEARCH REPORT
## ON EUROPEAN PATENT APPLICATION NO.

EP 13 19 9824

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2014

| Patent document cited in search report | | Publication date | Patent family member(s) | | Publication date |
|---|---|---|---|---|---|
| WO 2012058200 | A1 | 03-05-2012 | CN | 103314040 A | 18-09-2013 |
| | | | US | 2012108725 A1 | 03-05-2012 |
| | | | WO | 2012058200 A1 | 03-05-2012 |
| WO 9957193 | A1 | 11-11-1999 | AU | 3351199 A | 23-11-1999 |
| | | | CN | 1299394 A | 13-06-2001 |
| | | | EP | 1159349 A1 | 05-12-2001 |
| | | | JP | 2002513834 A | 14-05-2002 |
| | | | SE | 9801593 A | 08-11-1999 |
| | | | US | 6376595 B1 | 23-04-2002 |
| | | | WO | 9957193 A1 | 11-11-1999 |
| WO 2013060736 | A1 | 02-05-2013 | NONE | | |
| WO 0022040 | A1 | 20-04-2000 | AR | 020808 A1 | 29-05-2002 |
| | | | AT | 273345 T | 15-08-2004 |
| | | | AU | 748515 B2 | 06-06-2002 |
| | | | AU | 1421200 A | 01-05-2000 |
| | | | BR | 9914534 A | 03-07-2001 |
| | | | CN | 1326484 A | 12-12-2001 |
| | | | DE | 69919393 D1 | 16-09-2004 |
| | | | DE | 69919393 T2 | 23-12-2004 |
| | | | DK | 1137707 T3 | 29-11-2004 |
| | | | EP | 1137707 A1 | 04-10-2001 |
| | | | ES | 2222050 T3 | 16-01-2005 |
| | | | PL | 347899 A1 | 22-04-2002 |
| | | | PT | 1137707 E | 30-11-2004 |
| | | | US | 2002045711 A1 | 18-04-2002 |
| | | | WO | 0022040 A1 | 20-04-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9744371 A
- WO 9618662 A
- EP 517868 A
- EP 688794 A
- WO 9951646 A
- WO 0155230 A
- WO 2005118655 A
- EP 810235 A

**Non-patent literature cited in the description**

- **B. HAGSTRÖM.** Conference on Polymer Processing. *Extended Abstracts and Final Programme, Gothenburg,* 19 August 1997, vol. 4, 13
- **HEINO, E.L. ; LEHTINEN, A. ; TANNER J. ; SEPPÄLÄ, J. ; NESTE OY ; PORVOO, FINLAND.** Rheological characterization of polyethylene fractions. *Theor. Appl. Rheol., Proc. Int. Congr. Rheol,* 1992, vol. 11th (1), 360-362
- **HEINO, E.L. ; BOREALIS POLYMERS OY ; PORVOO, FINLAND.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754
- Encyclopedia of Polymer Science and Engineering. vol. 14, 492-509